# FASCICULE DE BREVET EUROPEEN

(11) **EP 3 200 363 B1**
(45) Date de publication et mention de la délivrance du brevet: **02.10.2019**
(21) Numéro de dépôt: 16305074.3
(22) Date de dépôt: 27.01.2016
(51) Int. Cl.: H04B 10/61

(54) **SYSTÈME D'ÉCHANTILLONNAGE OPTIQUE LINÉAIRE ET DE DÉTECTION COHÉRENTE D'UN SIGNAL OPTIQUE**
SYSTEM ZUR LINEAREN OPTISCHEN ABTASTUNG UND KOHÄRENTEN ERKENNUNG EINES OPTISCHEN SIGNALS
LINEAR OPTICAL SAMPLING SYSTEM AND COHERENT DETECTION OF AN OPTICAL SIGNAL

(43) Date de publication de la demande: 02.08.2017
(73) Titulaire: Alcatel Lucent, 91620 Nozay (FR)
(72) Inventeur: SHEN, Alexandre, 91767 PALAISEAU (FR); PROVOST, Jean-Guy, 91767 PALAISEAU (FR)
(74) Mandataire: Novagraaf Technologies

(56) Documents cités:
- EP-A1- 2 709 295
- US-A1- 2005 185 255
- US-A1- 2010 215 357

## Description

### DOMAINE

La présente invention se rapporte au domaine des télécommunications par réseaux optiques, et plus précisément aux systèmes pour l'échantillonnage optique linéaire ou la détection cohérente de signaux optiques complexes, à grande vitesse et avec des formats de codage avancés, qui sont utilisés dans les équipements de diagnostic et de surveillance.

### ARRIERE PLAN

Un oscillateur optique local de haute qualité OLO (pour « Optical Local Oscillator » en anglais) ou un signal optique de haute qualité sont nécessaires dans les méthodes ou appareillages utilisés pour l'échantillonnage électro-optique linéaire OLS (pour « Optical Linear Sampling » en anglais). La qualité de l'oscillateur optique local OLO et du signal optique peut être mesurée en termes de largeur de raie spectrale optique. La qualité d'un tel signal optique peut aussi être mesurée de façon équivalente par son temps de cohérence. Les signaux optiques de meilleure qualité ont une largeur de raie plus étroite ou un temps de cohérence plus long. S'il est possible de mettre en oeuvre un oscillateur optique local OLO de haute qualité (avec augmentation des coûts), le signal optique d'entrée n'a aucune raison d'être de haute qualité car la plupart du temps le signal optique OS (pour "Optical Signal" en anglais), que les systèmes OLS doivent mesurer, est inconnu.

Une des voies possibles est l'amélioration des systèmes OLS de telle sorte que la mauvaise qualité du signal optique d'entrée n'ait plus d'impact sur le signal optique de sortie résultant.

Une première solution connue consiste à dupliquer le schéma du système OLS en introduisant un retard de un bit entre le signal optique entrant dans le système OLS d'origine et le signal optique entrant dans le système dupliqué. L'un des principaux inconvénients de cette solution est que le retard d'un seul bit doit être réajusté au débit binaire du signal optique d'entrée. Cela limite ainsi son application pratique, sauf si une détection automatisé du débit binaire est mis en oeuvre, et que le retard de un bit est réajustée automatiquement.

Une autre solution connue est basée sur l'échantillonnage électro-optique linéaire simultané d'un signal optique continu ou signal CW (pour « Continuous Waveform » en anglais) et d'un signal optique modulé qui a été obtenu à partir de ce signal optique CW entrant. La mesure est réalisée de telle sorte que les deux échantillonnages électro-optiques linéaires exigent également une duplication du système OLS. Mais dans cette solution, aucun réajustement du retard n'est effectué. Le principal inconvénient de cette solution est qu'elle n'est pas appropriée pour la mesure par la technique OLS de n'importe quel signal optique d'entrée inconnu, puisque le signal optique modulé est produit à l'intérieur du dispositif expérimental. Cependant, cette solution est très robuste vis-à-vis de la qualité respective du signal optique modulé ou des signaux optiques pulsés de l'échantillonnage.

Le document US-2010/215357 concerne un agencement pour l'échantillonnage optique afin d'évaluer le champ électrique d'un signal d'entrée optique porteur de données.

### RESUME

La solution proposée a pour but d'éliminer les inconvénients précités, à savoir la nécessité de disposer d'un retard optique d'un bit ajustable avec le débit du signal d'entrée pour la première solution, ou bien l'incapacité de mesurer des signaux inconnus pour l'autre solution.

L'objet de la présente invention est un système d'échantillonnage optique linéaire et de détection cohérente d'un signal optique OS comprenant
- une source émettant un signal optique pulsé SP et un coupleur optique qui divise le signal optique pulsé SP en deux répliques, la première réplique du signal optique pulsé SP est envoyée vers un premier circuit hybride optique et la seconde réplique du signal optique pulsé SP est envoyée vers un second circuit hybride optique,
- une source émettant un signal optique OS et un coupleur optique qui divise le signal optique entrant OS en deux répliques, la première réplique du signal optique OS entrant est envoyée vers le premier circuit hybride optique et la seconde réplique du signal optique OS entrant est envoyée vers un appareil de récupération de la longueur d'onde WVL-R, dont la sortie est un signal optique à onde continue CW à la longueur d'onde centrale du signal optique OS entrant, qui l'envoie vers le second circuit hybride optique, de telle sorte que le signal optique OS est échantillonnée dans le premier circuit hybride et le signal optique à onde continue CW est échantillonné dans le second circuit hybride, et
- un dispositif BD-ADC comportant des photodétecteurs équilibrés détectant les signaux optiques à la sortie des deux circuits hybrides optiques et un convertisseur analogique-numérique ADC.

La solution repose sur l'idée de récupérer la longueur d'onde du signal optique d'entrée inconnu, puis d'échantillonner le signal optique CW récupéré parallèlement puisque le signal optique d'entrée modulé est également en cours d'échantillonnage, de telle sorte que les résultats finaux de l'échantillonnage soient indépendants du temps de cohérence du signal optique d'entrée, et également indépendants du débit binaire du signal optique d'entrée.

Selon un mode de réalisation, l'appareil de récupération de la longueur d'onde WVL-R comprend un filtre optique accordable ou un système de filtres optiques accordables.

Selon une variante, le filtre optique accordable est un interféromètre de Mach-Zender.

Selon une autre variante, le filtre optique accordable est un interféromètre de Fabry-Perrot.

Selon un aspect, un dispositif thermique permet d'accorder le filtre optique.

Selon un autre aspect, un dispositif de réglage électrique permet d'accorder le filtre optique.

Selon un autre mode de réalisation, l'appareil de récupération de la longueur d'onde WVL-R comprend en outre un coupleur optique, disposé en sortie du filtre accordable, et un photodétecteur disposé en sortie du coupleur optique, de telle sorte qu'une partie du signal optique filtré est détecté et restitué sous la forme d'un signal électrique utilisé dans une boucle de rétroaction pour accorder le filtre accordable.

Selon encore un autre mode de réalisation, l'appareil de récupération de la longueur d'onde WVL-R comprend en outre un amplificateur optique pour amplifier le niveau du signal optique filtré.

Selon une variante, l'amplificateur optique est un amplificateur optique à semiconducteur SOA fonctionnant dans son régime de saturation afin d'atténuer la modulation parasite sur le signal optique en sortie du filtre optique accordable.

Selon une autre variante, l'appareil de récupération de la longueur d'onde WVL-R comprend un résonateur en anneau.

Selon encore un autre mode de réalisation, le système comprend en outre un séparateur de polarisation qui sépare le signal optique entrant en deux modes de propagation orthogonaux entre eux.

La présente invention a aussi pour objet un procédé d'échantillonnage optique linéaire d'un signal optique OS au moyen du système précédemment décrit, comprenant les étapes suivantes:
- on sépare un signal optique pulsé SP entrant en deux modes de propagation orthogonaux entre eux,
- on divise chaque mode de propagation du signal optique pulsé SP en deux répliques, la première réplique du signal optique pulsé SP est envoyée vers un premier circuit hybride optique et la seconde réplique du signal optique pulsé SP est envoyée vers un second circuit hybride optique,
- on sépare un signal optique OS entrant en deux modes de propagation orthogonaux entre eux,
- on divise chaque mode de propagation du signal optique OS en deux répliques, la première réplique du signal optique OS est envoyée vers le premier circuit hybride optique et la seconde réplique du signal optique OS est envoyée vers un appareil de récupération de la longueur d'onde WVL-R, puis le signal continu contenant la longueur d'onde récupérée est envoyé vers le second circuit hybride optique,
- pour chaque mode de propagation, on envoie vers un dispositif BD-ADC les deux signaux optiques sortant du premier circuit hybride optique et les deux signaux optiques sortant du second circuit hybride optique.

La présente invention a aussi pour objet un procédé de détection cohérente d'un signal optique OS au moyen du système précédemment décrit, comprenant les étapes suivantes:
- on sépare un signal optique OS entrant en deux modes de propagation orthogonaux entre eux,
- on divise chaque mode de propagation du signal optique OS en deux répliques, la première réplique du signal optique OS est envoyée vers un circuit hybride optique et la seconde réplique du signal optique OS est envoyée vers un appareil de récupération de la longueur d'onde WVL-R, puis le signal continu contenant la longueur d'onde récupérée est envoyé vers le circuit hybride optique,
- on envoie vers un dispositif BD-ADC les quatre signaux optiques sortant du circuit hybride optique.

Cette solution est avantageuse pour l'échantillonnage optique linéaire OLS avec une meilleure flexibilité dans la surveillance des signaux optiques de format avancé, et aussi une solution plus souple pour les systèmes de transmission cohérents.

La solution proposée est basée sur la récupération de la longueur d'onde du signal optique d'entrée inconnu en utilisant des résonateurs qui diffèrent de l'art antérieur (NTT, NIST). Ce schéma de récupération de longueur d'onde peut également être utilisé dans tous les récepteurs cohérents (co-Rx) pour remplacer un laser accordable.

Pour le domaine d'application de l'échantillonnage optique linéaire OLS, cette nouvelle solution n'est pas dépendante du débit binaire du signal optique d'entrée, et elle sera compatible avec une éventuelle mauvaise qualité du signal optique d'entrée. Pour des applications de transmission cohérente, cette solution peut remplacer un laser CW accordable, ce qui permet de limiter la largeur de bande optique du système en raison de l'accordabilité limitée du laser accordable classique.

### BREVE DESCRIPTION

D'autres caractéristiques et avantages apparaîtront à la lecture de la description qui suit d'un mode de réalisation, donné bien entendu à titre illustratif et non limitatif, et dans le dessin annexé sur lequel
- la figure 1 illustre schématiquement un mode de réalisation partiel d'un système de détection cohérente d'un signal optique,
- la figure 2 illustre schématiquement un mode de réalisation d'un dispositif BD-ADC,
- la figure 3 illustre schématiquement un mode de réalisation d'un système complet de détection cohérente d'un signal optique,
- la figure 4 illustre schématiquement un mode de réalisation d'un système partiel de détection cohérente d'un signal optique,
- la figure 5 illustre schématiquement un mode de réalisation d'un système de détection cohérente pour les deux polarisations d'un signal optique,
- la figure 6 illustre schématiquement un autre mode de réalisation d'un système de détection cohérente pour les deux polarisations d'un signal optique,
- la figure 7 illustre schématiquement un mode de réalisation de l'appareil permettant la récupération de la longueur d'onde d'un signal optique comprenant un interféromètre de Fabry-Perrot,
- la figure 8 illustre schématiquement un autre mode de réalisation de l'appareil permettant la récupération de la longueur d'onde d'un signal optique comprenant un interféromètre en anneau,
- la figure 9 illustre schématiquement encore un autre mode de réalisation de l'appareil permettant la récupération de la longueur d'onde d'un signal optique comprenant un interféromètre de Fabry-Perrot et une boucle de rétroaction,
- la figure 10 illustre schématiquement encore un autre mode de réalisation de l'appareil permettant la récupération de la longueur d'onde d'un signal optique comprenant un interféromètre de Fabry-Perrot et un amplificateur optique à semiconducteur.

### DESCRIPTION DETAILLEE

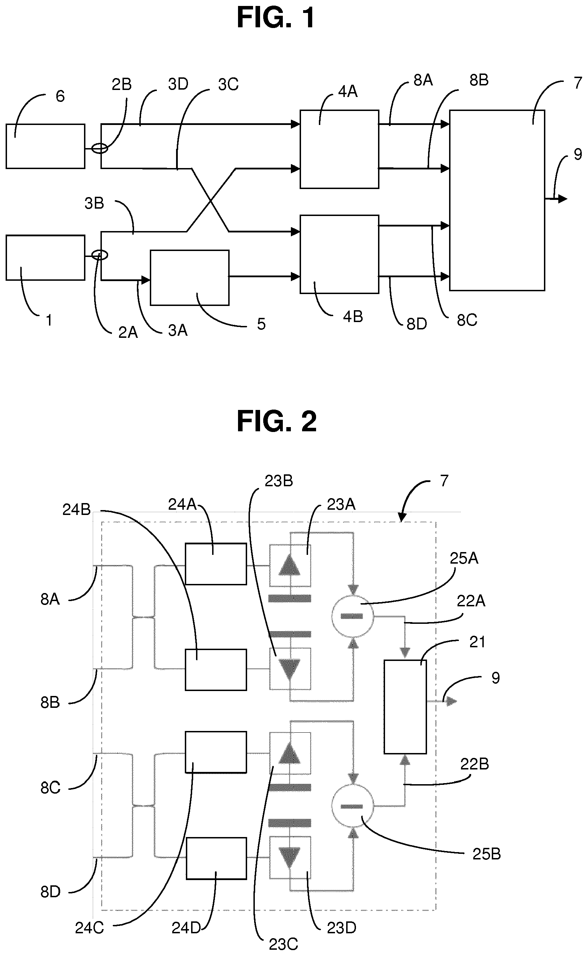

La figure 1 illustre un mode de réalisation partiel d'un système pour l'échantillonnage optique linéaire de signaux optiques OS complexes (codé en phase et/ou en amplitude) à très haut débit. Dans la réalité, le signal optique OS d'entrée se propage selon un mode inconnu. On projette donc le signal optique OS entrant dans le système sur deux modes de propagation linéaires arbitraires. Dans cette illustration, un seul mode de polarisation, par exemple ici le mode transverse électrique TE du signal optique OS vectoriel incident est échantillonné et traité par le système d'échantillonnage optique linéaire.

A une première entrée 1 du système d'échantillonnage optique linéaire, le signal optique OS porteur de données est divisé en deux répliques identiques par un coupleur optique **2A** qui sont envoyées sur deux chemins optiques et transportées chacune par une fibre optique PMF **3A, 3B** à maintien de polarisation. On entend par division d'un signal, la production de deux répliques identiques ayant chacune la moitié de la puissance du signal entrant. Une réplique du signal optique modulé porteur de données est dirigée directement vers le port d'entrée d'un premier circuit optique hybride **4A.** Cependant que l'autre réplique est envoyée dans un appareil permettant la récupération de la longueur d'onde WVL-R 5 (pour « Wavelength recovery » en anglais), par exemple ici un amplificateur semiconducteur SOA combiné avec un filtre optique. De telle sorte que, en sortie de l'appareil WVL-R **5,** on recueille un signal optique continu ne contenant plus de données codées mais à la longueur d'onde précise correspondant à l'onde porteuse du signal des données OS. Le signal optique continu sortant de l'appareil de récupération de la longueur d'onde WVL-R doit avoir une relation de phase avec le signal optique entrant dans l'appareil WVL-R. L'onde porteuse est alors dirigée vers le port d'entrée d'un deuxième circuit optique hybride **4B.**

Par rapport à l'état de l'art qui utilise un oscillateur local pour fournir un signal continu à la même longueur d'onde que le signal optique OS cohérent à détecter, ce système de détection permet d'obtenir un signal continu (normalement fourni par l'oscillateur local) en utilisant notamment un appareil permettant la récupération de la longueur d'onde WVL-R.

A une seconde entrée du système, une source SPS **6** (pour "Sampling Source Pulse" en anglais), tel qu'un oscillateur local OLO ou une source laser, émet un signal optique pulsé SP d'échantillonnage (pour "Sampling Pulse" en anglais). Un coupleur optique **2B** divise le signal optique pulsé SP en deux répliques qui sont envoyées sur deux chemins optiques et transportées chacune par une fibre optique PMF **3C, 3D** à maintien de polarisation (pour "Polarization Maintaining Fiber" en anglais) respectivement vers l'un des ports d'entrée d'un circuit optique hybride **4A, 4B.**

Le fonctionnement d'un circuit optique hybride revient à additionner les deux signaux optiques entrant respectivement dans chacun des deux ports d'entrée, après avoir modifié leur déphasage, et à envoyer la somme des deux signaux vers deux ports de sortie. Chacune des deux sorties porte une combinaison linéaire des deux signaux d'entrée, différente l'une de l'autre. Les coefficients utilisés dans ces combinaisons linéaires sont des nombres complexes, idéalement de module égal à l'unité. Si le déphasage entre les deux séries de coefficients précités est de 90°, alors cet hybride optique peut être appelé un hybride 90.

La polarisation du signal optique pulsé d'échantillonnage SP est alignée avec celle du signal optique OS de données. Le procédé d'alignement peut comporter des fibres PMF à maintien de polarisation correctement alignées avec les connecteurs aux entrées des circuits optiques hybrides.

Un dispositif BD-ADC 7 (pour « Balanced Detectors - Analogic to Digital Converter » en anglais) reçoit en entrée les signaux optiques, issus des deux ports de sortie des circuits optiques hybrides **4A** et **4B,** transportés par des fibres optiques PMF **8A, 8B** et **8C, 8D** respectivement. Le dispositif BD-ADC **7** combine ces quatre signaux optiques. On recueille, à la sortie **9** du dispositif BD-ADC **7** du système d'échantillonnage et de détection, l'information recherchée sous la forme d'un signal électrique numérique et complexe portant sur l'amplitude et la phase du signal optique OS échantillonné par les impulsions SP et numérisé. Cette information est ensuite récupérée en vue de son affichage après traitement électronique, par exemple sous la forme d'un diagramme de constellation ou encore d'un diagramme de l'oeil.

Sur la figure 2 est illustré un mode de réalisation d'un dispositif BD-ADC 7 qui reçoit en entrée les signaux optiques transportés par des fibres optiques PMF **8A-8D** provenant des circuits optiques hybrides **4A** et **4B.** Ce dispositif BD-ADC **7** détecte un signal optique cohérent traité, considéré comme un signal analogique, puis réalise la conversion analogique-numérique, et enfin délivre à son port de sortie **9** un signal électrique qui correspond à un niveau du signal analogique, donc le signal de sortie est numérique.

Le dispositif BD-ADC **7** comprend des photodétecteurs équilibrés BD **20** et un convertisseur analogique-numérique ADC **21** à deux entrées **22A, 22B.** On peut prévoir que le dispositif BD-ADC **7** comporte aussi des comparateurs des signaux électriques émis par les photodétecteurs équilibrés **23A, 23B, 23C, 23D.** Les signaux optiques transportés par des fibres optiques PMF 8A et 8B sont mélangés et traversent des lignes à retard optiques à réglage fin FDL **24A, 24B, 24C, 24D** (pour "Finely Tuned Delay Line" en anglais) introduisant un décalage temporel qui permet de compenser la différence constante de chemin optique entre les signaux, afin que ces signaux arrivent synchrones sur les photodétecteurs équilibrés BD **23A-23D** qui sont balancés entre eux, i.e. ils ont sensiblement le même niveau de réponse percusionnelle. Les photodétecteurs balancés sont connus de l'homme du métier. Cependant les lignes à retard peuvent être placées après les photodétecteurs équilibrés BD **23A-23D,** et dans ce cas il s'agit de lignes à retard temporel électriques, qui remplacent les lignes à retard optiques à réglage fin FDL **24A-24D.** Les signaux électriques analogiques émis par chaque paire de photodétecteurs jumelés **23A, 23B** ou **23C, 23D** sont envoyés respectivement dans un composant électronique **25A** ou **25B** qui réalise la fonction de différentiation (ou soustraction), puis ces signaux électriques amplifiés différentiels sont dirigés respectivement vers les ports d'entrées **22A, 22B** du convertisseur analogique-numérique ADC **21,** à la sortie **9** duquel on recueille un signal électrique portant l'information, le niveau électronique correspondant au signal optique OS échantillonné par les impulsions issues du signal pulsé SP.

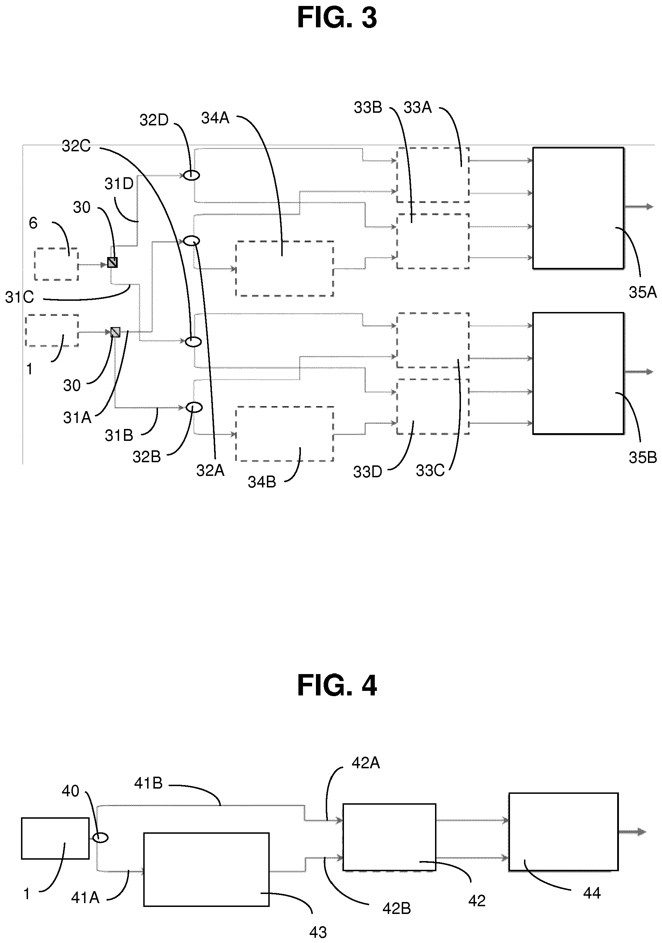

La figure 3 illustre un mode de réalisation d'un système d'échantillonnage complet pour le traitement d'un signal optique OS d'entrée porteur de données.

A une première entrée **1** dans le système d'échantillonnage, le signal optique OS est projeté sur deux modes de propagation linéaires arbitraires, orthogonaux entre eux. Cette orthogonalité doit être prise dans son sens le plus large, c'est-à-dire dans son sens algébrique, et n'est pas limité au sens de la perpendicularité. Ces modes de propagation peuvent, par exemple, correspondre respectivement au mode de polarisation transverse magnétique TM et au mode de polarisation transverse électrique TE du signal optique OS vectoriel.

Le signal optique OS entrant dans le système est projeté sur deux modes de propagation linéaires au moyen d'un séparateur PBS **30** (pour "Polarisation Beam Splitter" en anglais) qui permet de séparer une onde lumineuse en la projetant sur deux polarisations linéaires et orthogonales, par exemple respectivement le mode transverse magnétique TM et le mode transverse électrique TE.

Le mode transverse magnétique TM du signal optique OS est recueilli à la sortie du séparateur PBS **30** et transporté par une fibre à maintien de polarisation PMF **31A** (pour "Polarization Maintaining Fiber" en anglais) vers un coupleur optique **32A** qui divise le signal optique OS en deux répliques. On entend par division d'un signal la production de deux répliques identiques ayant chacune la moitié de la puissance du signal entrant. La première réplique du signal optique modulé porteur de données est dirigée directement vers un premier circuit optique hybride **33A.** Cependant que la seconde réplique est envoyée dans un appareil WVL-R **34A.** L'appareil WVL-R **34A** efface les données et laisse passer un signal continu sans données codées, mais à la longueur d'onde précise correspondant à l'onde porteuse du signal des données OS. L'onde porteuse est alors dirigée vers un deuxième circuit optique hybride **33B.**

Le mode transverse électrique TE du signal optique OS, séparé du mode transverse magnétique TM, est recueilli à la sortie du séparateur PBS **30** et guidé dans une fibre à maintien de polarisation PMF **31B** (pour "Polarization Maintaining Fiber" en anglais) vers un coupleur optique **32B** qui divise le signal optique OS en deux répliques. La première réplique est dirigée directement vers un troisième circuit optique hybride **33C,** alors que la seconde réplique est envoyée dans un appareil WVL-R **34B** qui efface les données et laisse passer un signal continu sans données codées, mais à la longueur d'onde précise correspondant à l'onde porteuse du signal des données OS qui est dirigé vers un quatrième circuit optique hybride **33D.**

A une seconde entrée **6** dans le système d'échantillonnage, une source SPS **6,** tel qu'un oscillateur local OLO ou une source laser par exemple, émet un signal optique pulsé SP qui est projeté sur deux modes de propagation linéaires, par exemple le mode transverse magnétique TM et le mode transverse électrique TE, au moyen d'un séparateur PBS **30.**

Le mode transverse magnétique TM du signal pulsé SP est recueilli à la sortie du séparateur PBS **30** et transporté par une fibre à maintien de polarisation PMF **31C** vers un coupleur optique **32C** qui divise le signal pulsé PS en deux répliques. Une réplique est transportée par une fibre à maintien de polarisation vers le quatrième circuit hybride **33D,** alors que l'autre réplique est envoyée vers le troisième circuit hybride **33C.**

Le mode transverse électrique TE du signal pulsé SP, séparé du mode transverse magnétique TM, est recueilli à la sortie du séparateur PBS **30** et guidé dans une fibre à maintien de polarisation PMF **31D** vers un coupleur optique **32D** qui divise le signal pulsé PS en deux répliques. Une réplique est transportée par une fibre à maintien de polarisation vers le deuxième circuit hybride **33B,** alors que l'autre réplique est envoyée vers le premier circuit hybride **33A.**

Chaque circuit optique hybride **33A-33D** additionne les deux signaux optiques entrant respectivement dans chacun des deux ses ports d'entrée, après avoir modifié leur déphasage, et envoie la somme des deux signaux vers chacun de ses deux ports de sortie. Les quatre signaux provenant des quatre ports de sortie des premier **33A** et deuxième **33B** coupleurs hybrides sont dirigés vers les quatre ports d'entrée d'un dispositif BD-ADC **35A.** Les quatre signaux provenant des quatre ports de sortie des troisième **33C** et quatrième **33D** coupleurs hybrides sont dirigés vers les quatre ports d'entrée d'un autre dispositif BD-ADC **35B.**

On considérera maintenant la figure 4 qui illustre un mode de réalisation partiel d'un système de détection cohérente, en ce sens que le système de détection ici partiellement représenté ne détecte qu'une seule des deux composantes orthogonales du signal optique OS. Dans le cas d'un signal optique OS cohérent dont on ignore l'état de polarisation, deux systèmes de détection, tels que représenté, doivent être couplés et utilisés pour détecter complètement le signal optique OS. La détection cohérente ne peut détecter et traiter qu'un signal optique dans un état défini de polarisation, ici par exemple on a représenté la détection de la polarisation transverse électrique TE.

A l'entrée **1** du système de détection, le signal optique OS porteur de données est divisé en deux répliques identiques par un coupleur optique **40.** Les deux répliques sont envoyées respectivement sur deux chemins optiques, transportées chacune par une fibre optique PMF **41A, 41B** à maintien de polarisation. Une première réplique du signal optique OS est dirigée directement vers un port d'entrée **42A** d'un circuit optique hybride **42,** cependant que l'autre réplique est envoyée dans un appareil WVL-R **43.** A la sortie de l'appareil WVL-R **43,** on recueille un signal continu à la même longueur d'onde que le signal optique OS cohérent à détecter qui est dirigé vers l'autre port d'entrée **42B** du circuit optique hybride **42.** Les deux signaux optiques entrant respectivement à chacun des deux ports d'entrée **42A** et **42B** du circuit optique hybride **42** sont additionnés, et la somme des deux signaux, après avoir modifié leur déphasage, est envoyée vers les deux ports de sortie du circuit optique hybride **42.** Les signaux optiques issus du circuit optique hybride **42** sont injectés dans les photodétecteurs balancés du dispositif BD-ADC **44,** et les signaux électriques analogiques sont convertis en niveaux discrets. A la sortie de ce dispositif BD-ADC **44,** on retrouve l'intégralité du signal cohérent pour l'état de polarisation transverse électrique TE choisi pour être représenté sur cette figure 4.

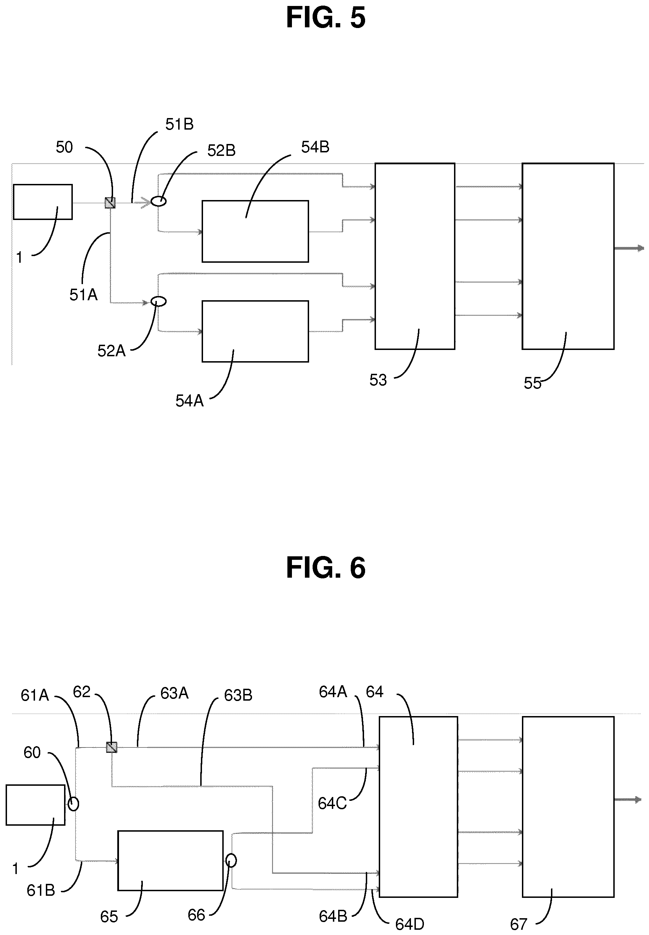

La figure 5 illustre un mode de réalisation d'un détecteur cohérent à la fois pour la polarisation transverse magnétique TM et pour la polarisation transverse électrique TE du signal optique OS, comprenant une étape de récupération de longueur d'onde, en remplacement de deux lasers accordables en tant que oscillateurs locaux. La figure 5 propose un schéma possible d'un appareillage complet qui peut détecter et traiter de manière cohérente les deux états de polarisation d'un signal optique d'entrée complexe porteur de données, qui est divisé sur deux états de polarisation détectés et traités de manière cohérente séparément.

Un signal optique OS complexe à détecter, porteur de données, dont l'état de polarisation est a priori inconnu, est injecté à l'entrée **1** du système de détection. Un séparateur de polarisation PBS **50** permet de séparer chacune des composantes orthogonales TM et TE du signal optique OS complexe et les envoyer sur deux chemins optiques différents.

La composante de polarisation transverse magnétique TM est transportée par une fibre à maintien de polarisation PMF **51A** vers un coupleur optique **52A** qui divise le signal optique en deux répliques. La première réplique du signal optique est dirigée directement vers un circuit optique hybride **53,** cependant que la seconde réplique est envoyée dans un appareil WVL-R **54A** qui efface les données et laisse passer un signal continu dirigé vers le circuit optique hybride **53.**

De son côté, la composante de polarisation transverse électrique TE est transportée par une fibre à maintien de polarisation PMF **51B** vers un autre coupleur optique **52B** qui divise le signal optique en deux répliques. La première réplique du signal optique est dirigée directement vers un circuit optique hybride **53,** cependant que la seconde réplique est envoyée dans un autre appareil WVL-R **54B** qui efface les données et laisse passer un signal continu dirigé vers le circuit optique hybride **53.**

Le circuit optique hybride **53** a quatre ports d'entrée et quatre ports de sortie qui sont configurés pour traiter chacun des états de polarisation orthogonaux comme précédemment décrit. Le dispositif BD-ADC **55** achève la détection du signal complexe et réalise la recombinaison des informations portées sur les deux états de polarisation optique, reconstituant ainsi le signal complexe initial.

La figure 6 illustre un autre mode de réalisation d'un détecteur cohérent, à la fois pour la polarisation transverse magnétique TM et pour la polarisation transverse électrique TE du signal optique OS, comprenant une étape de récupération de longueur d'onde en remplacement d'un laser accordable en tant qu'oscillateur local. La figure 6. donne une variante de la figure 5, dans laquelle seule une longueur d'onde de récupération est nécessaire, à condition que cette fonction de récupération de longueur d'onde soit ici sensible à l'état de polarisation du signal optique d'entrée. Ce schéma peut être préférentiellement réalisé en optique en espace libre à l'aide de composants massifs insensibles à la polarisation.

Un signal optique OS complexe à détecter, porteur de données, dont l'état de polarisation est a priori inconnu, est injecté à l'entrée **1** du système de détection. A l'entrée 1 du système de détection, le signal optique OS porteur de données est divisé en deux répliques identiques par un coupleur optique **60.** Les deux répliques sont envoyées respectivement sur deux chemins optiques, transportées chacune par une fibre optique PMF **61A, 61B** à maintien de polarisation.

Sur la fibre optique PMF **61A,** un séparateur de polarisation PBS **62** permet de séparer chacune des composantes orthogonales TM et TE de la première réplique du signal optique OS complexe, et les envoyer chacune sur deux chemins optiques différents. La composante de polarisation transverse électrique TE est transportée par une fibre à maintien de polarisation PMF **63A** vers un port d'entrée **64A** d'un circuit optique hybride **64,** et la composante de polarisation transverse magnétique TM est transportée par une fibre à maintien de polarisation PMF **63B** vers un port d'entrée **64B** du circuit optique hybride **64.**

Cependant la seconde réplique du signal optique OS complexe est envoyée dans un appareil WVL-R **65** qui efface les données et laisse passer un signal continu qui est divisé par un coupleur optique **66** en deux répliques respectivement dirigées vers les ports d'entrée **64C** et **64D** du circuit optique hybride **64.**

Le circuit optique hybride **64** a quatre ports d'entrée **64A, 64B, 64C** et **64D** et quatre ports de sortie reliés à un dispositif BD-ADC **67** qui achève la détection du signal complexe.

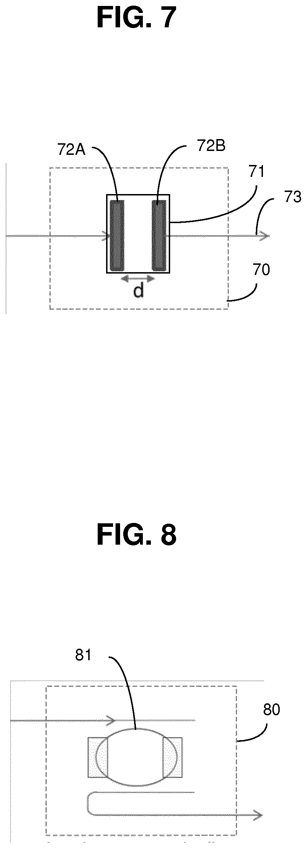

La figure 7 illustre schématiquement un mode de réalisation d'un appareil permettant la récupération de la longueur d'onde WVL-R **70** comprenant un filtre optique accordable ou un système de filtres accordables. Dans le cas présent un interféromètre de Fabry-Perot (FP) **71,** parfois appelé aussi filtre de Fabry-Perot (FFP), est utilisé et le paramètre de réglage est l'épaisseur **d** de l'interféromètre FP. On pourrait tout aussi bien utiliser un interféromètre de Mach-Zehnder ou un résonateur en anneau.

La réponse spectrale en transmission d'un tel interféromètre FP **71** est un peigne de longueurs d'onde (ou de fréquences) qui sont également espacées, et la période spectrale (ou distance spectrales entre deux dents du peigne) est constante et appelée l'intervalle spectral libre (ISL) de l'interféromètre FP **71.** Cet intervalle ISL peut être réglé par la distance **d** séparant les deux miroirs **72A** et **72B** constituant l'interféromètre FP **71.**

Les longueurs d'onde de résonance de l'interféromètre FP **71** peuvent être réglées en ajustant l'indice de réfraction du matériau remplissant l'interstice entre les deux miroirs **72A** et **72B** de l'interféromètre FP **71.** Ce matériau peut être par exemple un matériau diélectrique électro-optique (par exemple le niobate de lithium, ou LiNbO₃) dont l'indice de réfraction peut être modifié en faisant varier l'intensité d'un champ électrique qui lui est appliqué. L'une des longueurs d'onde de résonance doit alors être ajustée à la longueur d'onde (ou fréquence) porteuse de l'information du signal optique OS complexe, et l'intervalle ISL de l'interféromètre FP **71** devra être réglé de telle sorte qu'aucune des composantes spectrales du signal optique OS complexe ne passe par l'interféromètre FP **71.** Ainsi seule la longueur d'onde (ou fréquence) porteuse du signal optique OS complexe passe par l'interféromètre FP 71 et est transmise vers le port de sortie **73** de l'appareil WVL-R **70.**

Le signal optique transmis est continu et mono-fréquence (ou monochromatique), ce qui est le but de la fonctionnalité de l'appareil de recouvrement de la longueur d'onde WVL-R **70.** Cet appareil WVL-R **70** permettant la récupération de la longueur d'onde peut être réalisé en onde guidé ou bien en onde en propagation libre dans l'espace, ce dernier cas est particulièrement bien adapté au schéma de réalisation d'un détecteur cohérent tel que celui représenté sur la figure 6.

Dans le mode de réalisation illustré sur la figure 8, l'appareil permettant la récupération de la longueur d'onde WVL-R **80** utilise un résonateur en anneau **81** réalisant la même fonctionnalité que l'interféromètre de Fabry-Perot (FP) de la figure 7 et présentant une réponse spectrale en transmission similaire.

Ici, l'intervalle ISL est déterminé par le diamètre de l'anneau du résonateur en anneau **81.** Le paramètre de réglage de la position spectrale des dents du peigne est dans ce cas l'indice de réfraction effectif du guide d'onde réalisant le résonateur en anneau **81.** Cet indice de réfraction effectif du matériau composant l'anneau du résonateur en anneau **81** peut être modifié en changeant la température grâce à un dispositif thermique, en mettant notamment un élément régulateur de température (élément chauffant à résistance ou micro-Peltier). L'indice de réfraction effectif peut aussi être réglé grâce à un dispositif de réglage électrique, par injection dans le matériau constituant l'anneau de porteurs de charges par l'intermédiaire d'un courant électrique.

Ces techniques de variation de l'indice de réfraction effectif sont particulièrement bien adaptées dans le cas où le résonateur en anneau **81** est réalisé sur un substrat semiconducteur (Si, InP ou GaAs), et l'ensemble des appareils décrits est réalisé sur un circuit photonique intégré (PIC). Dans le cas où les guides d'onde sont des fibres optiques monomodes, le réglage fin de la position des dents du peigne peut soit se réaliser par un changement de température, soit par une élongation locale de la fibre optique sous une contrainte mécanique. Par exemple, on peut utiliser un tube de céramique piézoélectrique autour duquel est enroulée une portion de fibre optique constituant le résonateur en anneau **81.**

En utilisant l'un des modes de réalisation d'un résonateur en anneau **81** décrit précédemment, on peut également obtenir la fonctionnalité de recouvrement de la longueur d'onde. Dans le cas où le résonateur en anneau **81** est réalisé sur un circuit photonique intégré (PIC) et si un effort est fait sur la conception afin de rendre le résonateur en anneau **81** insensible à la polarisation, alors le mode de réalisation proposé par la figure 8 convient à la réalisation du schéma de détection cohérente présenté sur la figure 6. Cet effort de conception porte en particulier sur l'utilisation de guides d'onde insensibles à la polarisation de la lumière, notamment de guides d'onde dont la section présente des symétries axiales (par exemple de section carrée), et de coupleurs optiques également insensibles à la polarisation.

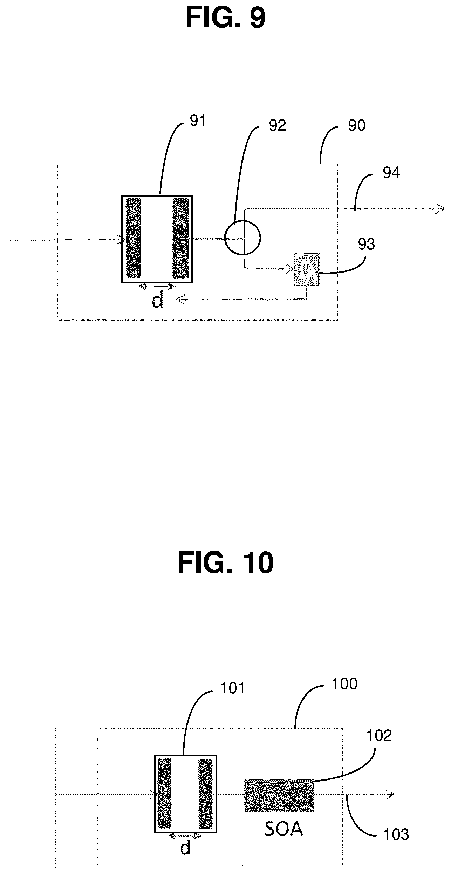

La figure 9 illustre un autre mode de réalisation de l'appareil permettant la récupération de la longueur d'onde WVL-R **90** avec un filtre accordable, ici un interféromètre de Fabry-Perot (FP) **91,** suivi d'une boucle de rétroaction.

Un coupleur optique **92,** disposé en sortie de l'interféromètre FP **91,** est utilisé pour dupliquer le signal optique, ceci afin de prélever une partie du signal optique filtré qui est détectée par un photodétecteur D **93,** alors qu'une copie du signal optique est dirigée vers la sortie **94.** Le photodétecteur D **93** détecte le signal optique et délivre un signal électrique qui est comparé à un signal électrique de niveau préétabli. Le résultat de la comparaison est renvoyé vers un appareil électromécanique qui commande l'un des miroirs de l'interféromètre FP **91,** ceci afin de régler la distance **d** séparant les deux miroirs. Le signal électrique est utilisé dans une boucle de rétroaction pour accorder le filtre accordable, de sorte que le signal optique continu CW récupéré en sortie de l'appareil permettant la récupération de la longueur d'onde WVL-R **90** est maximisé.

Ce mode de réalisation permet d'établir une contre-réaction sur l'intervalle spectral libre ISL de l'interféromètre FP **91,** afin de rendre l'interféromètre FP **91** adapté au débit du signal optique complexe à détecter. En effet, l'intervalle spectral libre ISL ne doit pas être un multiple du débit afin de bloquer les composantes spectrales du signal optique qu'il faut récupérer en longueur d'onde. Le système d'asservissement est conçu pour bloquer toutes les composantes spectrales du signal optique complexe, autres que la porteuse du signal optique. Des mesures préalables de l'appareil sont nécessaires pour déterminer les niveaux préétablis auxquels peut être comparé le signal optique détecté par le photodétecteur D **93.** Le circuit électronique traduisant l'algorithme de comparaison, ainsi que le système d'asservissement et d'actuation mécanique des miroirs ne sont pas représentés sur la figure 9. Ce mode de réalisation peut être adapté et réalisé de façon avantageuse sur le résonateur en anneau de la figure 8.

La figure 10 illustre encore un autre mode de réalisation de l'appareil de récupération de la longueur d'onde WVL-R **100** avec un interféromètre de Fabry-Perot (FP) **101** associé à un amplificateur optique tel qu' un amplificateur à fibre dopée à l'erbium EDFA (pour « Erbium Doped Fiber Amplifier » en anglais) ou un amplificateur optique à semiconducteur SOA **102** (pour « Semiconductor Optical Amplifier » en anglais) fonctionnant dans son régime de saturation. Cette association a l'avantage de supprimer l'effet de mise en forme du signal optique récupéré en longueur d'onde, ce qui signifie que le signal optique de sortie aura son contraste de modulation résiduelle réduit par l'amplificateur optique.

Ici un amplificateur optique à semiconducteur SOA **102** est placé sur le chemin de sortie de l'interféromètre FP **101.** L'amplificateur SOA **102** est utilisé en régime de saturation afin de minimiser le contraste du signal optique en sortie de l'interféromètre FP **101.** En effet, dans les cas où l'interféromètre FP **101** n'est pas bien ajusté où bien certaines harmoniques du signal optique modulé sont quand-même passées par l'interféromètre FP **101,** le signal optique en sortie de l'interféromètre FP **101** n'est pas parfaitement continu mais présente une faible modulation parasite. L'amplificateur SOA **102** en régime de saturation permet alors de minimiser ces modulations parasites. Ce mode de réalisation utilisant un amplificateur SOA peut être appliqué avantageusement au cas où un résonateur en anneau est utilisé à la place de l'interféromètre FP **101.** Une combinaison d'un système d"asservissement (cf. figure 9) et de l'utilisation d'un amplificateur SOA (cf. figure 10) est aussi envisageable pour la réalisation de la fonctionnalité de récupération de la longueur d'onde.

## Revendications

1. Système d'échantillonnage optique linéaire et de détection cohérente d'un signal optique comprenant
- une source (6) apte à émettre un signal optique pulsé,
- une entrée (1) apte à recevoir un signal optique,
- au moins un premier circuit hybride optique (4A) et un second circuit hybride (4B),
- un dispositif (7) comportant des photodétecteurs équilibrés (23A-23D) et un convertisseur analogique-numérique (21),
**caractérisé en ce qu'**il comprend en outre
- un coupleur optique (2B) apte à diviser le signal optique pulsé en deux répliques, la première réplique du signal optique pulsé est envoyée vers ledit premier circuit hybride optique (4A) et la seconde réplique du signal optique pulsé est envoyée vers ledit second circuit hybride optique (4B),
- un coupleur optique (2A) apte à diviser le signal optique entrant en deux répliques, la première réplique du signal optique entrant est envoyée vers ledit premier circuit hybride optique (4A) et la seconde réplique du signal optique entrant est envoyée vers un appareil de récupération de la longueur d'onde (5), dont la sortie est un signal optique à onde continue à la longueur d'onde centrale du signal optique entrant, qui l'envoie vers ledit second circuit hybride optique (4B),
- les photodétecteurs équilibrés (23A-23D) étant aptes à détecter les signaux optiques à la sortie des deux circuits hybrides optiques (4A, 4B).

2. Système selon la revendication 1, dans lequel l'appareil de récupération de la longueur d'onde (70) comprend un filtre optique accordable ou un système de filtres optiques accordables.

3. Système selon la revendication 2, dans lequel le filtre optique accordable est un interféromètre de Mach-Zender.

4. Système selon la revendication 2, dans lequel le filtre optique accordable est un interféromètre de Fabry-Perrot (71).

5. Système selon l'une des revendications 2 à 4, dans lequel un dispositif thermique permet d'accorder le filtre optique.

6. Système selon l'une des revendications 2 à 4, dans lequel un dispositif de réglage électrique permet d'accorder le filtre optique.

7. Système selon l'une des revendications 2 à 6, dans lequel l'appareil de récupération de la longueur d'onde (90) comprend en outre un coupleur optique (92), disposé en sortie du filtre accordable, et un photodétecteur (93) disposé en sortie du coupleur optique (92), de telle sorte qu'une partie du signal optique filtré est détecté et restitué sous la forme d'un signal électrique utilisé dans une boucle de rétroaction pour accorder le filtre accordable.

8. Système selon l'une des revendications 2 à 6, dans lequel l'appareil de récupération de la longueur d'onde (100) comprend en outre un amplificateur optique pour amplifier le niveau du signal optique filtré.

9. Système selon la revendication 8, dans lequel l'amplificateur optique est un amplificateur optique à semiconducteur (102) fonctionnant dans son régime de saturation afin d'atténuer la modulation parasite sur le signal optique en sortie du filtre optique accordable.

10. Système selon la revendication 1, dans lequel l'appareil de récupération de la longueur d'onde (80) comprend un résonateur en anneau (81).

11. Système selon l'une des revendications précédentes, comprenant en outre un séparateur de polarisation (30) qui sépare le signal optique en deux modes de propagation (TM, TE) orthogonaux entre eux.

12. Procédé d'échantillonnage optique linéaire et de détection cohérente d'un signal optique au moyen du système selon l'une des revendications précédentes, comprenant les étapes suivantes:
- on sépare un signal optique pulsé en deux modes de propagation (TM, TE) orthogonaux entre eux,
- on divise chaque mode de propagation du signal optique pulsé en deux répliques, la première réplique du signal optique pulsé est envoyée vers un premier circuit hybride optique (33B, 33D) et la seconde réplique du signal optique pulsé est envoyée vers un second circuit hybride optique (33A, 33C),
- on sépare un signal optique entrant en deux modes de propagation (TM, TE) orthogonaux entre eux,
- on divise chaque mode de propagation du signal optique en deux répliques, la première réplique du signal optique est envoyée vers le premier circuit hybride optique (33A, 33C) et la seconde réplique du signal optique est envoyée vers un appareil de récupération de la longueur d'onde (34A, 34B), puis le signal continu contenant la longueur d'onde récupérée est envoyé vers le second circuit hybride optique (33B, 33D),
- pour chaque mode de propagation, on envoie vers un dispositif (35A, 35B) les deux signaux optiques sortant du premier circuit hybride optique (33A, 35C) et les deux signaux optiques sortant du second circuit hybride optique (33B, 33D).

13. Procédé de détection cohérente d'un signal optique selon la revendication 12, au
moyen du système selon l'une des revendications 1 à 11, dans lequel la première réplique du signal optique est envoyée vers un circuit hybride optique (42, 53, 64) et la seconde réplique du signal optique est envoyée vers un appareil de récupération de la longueur d'onde (43, 54A, 54B, 65), puis le signal continu contenant la longueur d'onde récupérée est envoyé vers le circuit hybride optique (42, 53, 64), et on envoie vers un dispositif (44, 55, 67) les quatre signaux optiques sortant du circuit hybride optique (42, 53, 64).

## Patentansprüche

1. System zur linearen optischen Abtastung und kohärenten Erkennung eines optischen Signals, umfassend:
- eine Quelle (6), die geeignet ist, ein gepulstes optisches Signal auszugeben,
- einen Eingang (1), der geeignet ist, ein optisches Signal zu empfangen,
- wenigstens eine erste optische Hybridschaltung (4A) und eine zweite Hybridschaltung (4B),
- eine Vorrichtung (7), umfassend ausgeglichene Photodetektoren (23A-23D) und einen analog-digitalen Wechselrichter (21),
**dadurch gekennzeichnet, dass** es darüber hinaus umfasst
- einen optischen Koppler (2B), der geeignet ist, das gepulste optische Signal in zwei Repliken zu unterteilen, wobei die erste Replik des gepulsten optischen Signals zu der ersten optischen Hybridschaltung (4A) gesendet ist und die zweite Replik des gepulsten optischen Signals zu der zweiten optischen Hybridschaltung (4B) gesendet ist,
- einen optischen Koppler (2A), der geeignet ist, das eingehende optische Signal in zwei Repliken zu unterteilen, wobei die erste Replik des eingehenden optischen Signals zu der ersten optischen Hybridschaltung (4A) gesendet ist und die zweite Replik des eingehenden optischen Signals zu einem Auffanggerät der Wellenlänge (5) gesendet ist, deren Ausgang ein optisches Signal mit kontinuierlicher Welle mit der zentralen Wellenlänge des eingehenden optischen Signals ist, das sie zu der zweiten optischen Hybridschaltung (4B) sendet,
- wobei die ausgeglichenen Photodetektoren (23A-23D) geeignet sind, die optischen Signale am Ausgang der zwei optischen Hybridschaltungen (4A, 4B) zu erkennen.

2. System nach Anspruch 1, bei dem das Auffanggerät der Wellenlänge (70) einen abstimmbaren optischen Filter oder ein System aus abstimmbaren optischen Filtern umfasst.

3. System nach Anspruch 2, bei dem der abstimmbare optische Filter ein Interferometer nach Mach-Zender ist.

4. System nach Anspruch 2, bei dem der abstimmbare optische Filter ein Interferometer nach Fabry-Perrot (71) ist.

5. System nach einem der Ansprüche 2 bis 4, bei dem eine thermische Vorrichtung das Abstimmen des optischen Filters zulässt.

6. System nach einem der Ansprüche 2 bis 4, bei dem eine elektrische Einstellvorrichtung das Abstimmen des optischen Filters zulässt.

7. System nach irgendeinem der Ansprüche 2 bis 6, bei dem das Auffanggerät der Wellenlänge (90) darüber hinaus einen optischen Koppler (92), der am Ausgang des abstimmbaren Filters angeordnet ist, und einen Photodetektor (93), der am Ausgang des optischen Kopplers (92) angeordnet ist, derart umfasst, dass ein Verlust des gefilterten optischen Signals detektiert und in Form eines elektrischen Signals wiedergegeben ist, das in einem Rückkopplungskreis zum Abstimmen des abstimmbaren Filters verwendet ist.

8. System nach einem der Ansprüche 2 bis 6, bei dem das Auffanggerät der Wellenlänge (100) darüber hinaus einen optischen Verstärker zum Verstärken des Niveaus des gefilterten optischen Signals umfasst.

9. System nach Anspruch 8, bei dem der optische Verstärker ein optischer Verstärker mit Halbleiter (102) ist, der in seinem Sättigungszustand arbeitet, um die Störmodulation auf dem optischen Signal am Ausgang des abstimmbaren optischen Filters abzuschwächen.

10. System nach Anspruch 1, bei dem das Auffanggerät der Wellenlänge (80) einen Ringresonator (81) umfasst.

11. System nach einem der voranstehenden Ansprüche, umfassend darüber hinaus einen Polarisationsseparator (30), der das optische Signal in zwei untereinander orthogonale Verbreitungsmodi (TM, TE) teilt.

12. Verfahren zur linearen optischen Abtastung und kohärenten Erkennung eines optischen Signals mittels des Systems nach einem der voranstehenden Ansprüche, umfassend die folgenden Schritte:
- Es wird ein gepulstes optisches Signal in zwei untereinander orthogonale Verbreitungsmodi (TM, TE) getrennt,
- Es wird jeder Verbreitungsmodus des gepulsten optischen Signals in zwei Repliken unterteilt, wobei die erste Replik des gepulsten optischen Signals zu einer ersten optischen Hybridschaltung (33B, 33D) gesendet ist und die zweite Replik des gepulsten optischen Signals zu einer zweiten optischen Hybridschaltung (33A, 33C) gesendet ist,
- Es wird ein eingehendes optisches Signal in zwei untereinander orthogonale Verbreitungsmodi (TM, TE) getrennt,
- Es wird jeder Verbreitungsmodus des optischen Signals in zwei Repliken unterteilt, wobei die erste Replik des optischen Signals zu der ersten optischen Hybridschaltung (33A, 33C) gesendet ist und die zweite optische Replik des Signals zu einem Auffanggerät der Wellenlänge (34A, 34B) gesendet ist, dann wird das kontinuierliche Signal, das die aufgefangene Wellenlänge enthält, zur zweiten optischen Hybridschaltung (33B, 33D) geschickt,
- für jeden Verbreitungsmodus werden die zwei ausgehenden optischen Signale der ersten optischen Hybridschaltung (33A, 35C) und die zwei ausgehenden optischen Signale der zweiten optischen Hybridschaltung (33B, 33D) zu einer Vorrichtung (35A, 35B) gesendet.

13. Kohärentes Erkennungsverfahren eines optischen Signals nach Anspruch 12 mittels des Systems nach einem der Ansprüche 1 bis 11, bei dem die erste Replik des optischen Signals zu einer optischen Hybridschaltung (42, 53, 64) gesendet ist und die zweite Replik des optischen Signals zu einem Auffanggerät der Wellenlänge (43, 54A, 54B, 65) gesendet ist, dann wird das kontinuierliche Signal, das die aufgefangene Wellenlänge enthält, zur optischen Hybridschaltung (42, 53, 64) gesendet, und die vier ausgehenden optischen Signale der optischen Hybridschaltung (42, 53, 64) werden zu der Vorrichtung (44, 55, 67) gesendet.

## Claims

1. System for linear optical sampling and coherent detection of an optical signal comprising
- a source (6) able to emit a pulsed optical signal,
- an input (1) able to receive an optical signal,
- at least a first optical hybrid circuit (4A) and a second hybrid circuit (4B),
- a device (7) comprising balanced photodetectors (23A-23D) and an analogue-digital converter (21),
**characterized in that** it further comprises
- an optical coupler (2B) able to divide the pulsed optical signal into two replicas, the first replica of the pulsed optical signal is dispatched to said first optical hybrid circuit (4A) and the second replica of the pulsed optical signal is dispatched to said second optical hybrid circuit (4B),
- an optical coupler (2A) able to divide the incoming optical signal into two replicas, the first replica of the incoming optical signal is dispatched to said first optical hybrid circuit (4A) and the second replica of the incoming optical signal is dispatched to a wavelength recovery apparatus (5), whose output is a continuous-wave optical signal at the central wavelength of the incoming optical signal, which dispatches it to said second optical hybrid circuit (4B),
- the balanced photodetectors (23A-23D) being able to detect the optical signals at the output of the two optical hybrid circuits (4A, 4B).

2. System according to Claim 1, in which the wavelength recovery apparatus (70) comprises a tunable optical filter or a system of tunable optical filters.

3. System according to Claim 2, in which the tunable optical filter is a Mach-Zender interferometer.

4. System according to Claim 2, in which the tunable optical filter is a Fabry-Perrot interferometer (71).

5. System according to one of Claims 2 to 4, in which a thermal device makes it possible to tune the optical filter.

6. System according to one of Claims 2 to 4, in which an electrical adjustment device makes it possible to tune the optical filter.

7. System according to one of Claims 2 to 6, in which the wavelength recovery apparatus (90) further comprises an optical coupler (92), disposed at the output of the tunable filter, and a photodetector (93) disposed at the output of the optical coupler (92), in such a way that a part of the filtered optical signal is detected and restored in the form of an electrical signal used in a feedback loop to tune the tunable filter.

8. System according to one of Claims 2 to 6, in which the wavelength recovery apparatus (100) further comprises an optical amplifier for amplifying the level of the filtered optical signal.

9. System according to Claim 8, in which the optical amplifier is a semiconductor optical amplifier (102) operating in its saturation regime so as to attenuate the parasitic modulation on the optical signal at the output of the tunable optical filter.

10. System according to Claim 1, in which the wavelength recovery apparatus (80) comprises a ring resonator (81).

11. System according to one of the preceding claims, further comprising a polarization splitter (30) which splits the optical signal into two mutually orthogonal propagation modes (TM, TE).

12. Method of linear optical sampling and coherent detection of an optical signal by means of the system according to one of the preceding claims, comprising the following steps:
- a pulsed optical signal is split into two mutually orthogonal propagation modes (TM, TE),
- each propagation mode of the pulsed optical signal is divided into two replicas, the first replica of the pulsed optical signal is dispatched to a first optical hybrid circuit (33B, 33D) and the second replica of the pulsed optical signal is dispatched to a second optical hybrid circuit (33A, 33C),
- an incoming optical signal is split into two mutually orthogonal propagation modes (TM, TE),
- each propagation mode of the optical signal is divided into two replicas, the first replica of the optical signal is dispatched to the first optical hybrid circuit (33A, 33C) and the second replica of the optical signal is dispatched to a wavelength recovery apparatus (34A, 34B), and then the continuous signal containing the recovered wavelength is dispatched to the second optical hybrid circuit (33B, 33D),
- for each propagation mode, the two optical signals exiting the first optical hybrid circuit (33A, 33C) and the two optical signals exiting the second optical hybrid circuit (33B, 33D) are dispatched to a device (35A, 35B).

13. Method of coherent detection of an optical signal according to Claim 12, by means of the system according to one of Claims 1 to 11, in which
the first replica of the optical signal is dispatched to an optical hybrid circuit (42, 53, 64) and the second replica of the optical signal is dispatched to a wavelength recovery apparatus (43, 54A, 54B, 65), and then the continuous signal containing the recovered wavelength is dispatched to the optical hybrid circuit(42, 53, 64), and the four optical signals exiting the optical hybrid circuit (42, 53, 64) are dispatched to a device (44, 55, 67).
